# EUROPÄISCHE PATENTSCHRIFT

(11) **EP 3 548 737 B1**
(45) Veröffentlichungstag und Bekanntmachung des Hinweises auf die Patenterteilung: **23.03.2022**
(21) Anmeldenummer: 17809285.4
(22) Anmeldetag: 05.12.2017
(51) Int. Cl.: F03D 7/02

(54) **WINDENERGIEANLAGE UND VERFAHREN ZUM BETREIBEN EINER WINDENERGIEANLAGE**
WIND TURBINE AND METHOD FOR OPERATING A WIND TURBINE
ÉOLIENNE ET PROCÉDÉ PERMETTANT DE FAIRE FONCTIONNER UNE ÉOLIENNE

(30) Priorität: 05.12.2016 DE 102016123450
(43) Veröffentlichungstag der Anmeldung: 09.10.2019
(73) Patentinhaber: Wobben Properties GmbH, 26607 Aurich (DE)
(72) Erfinder: MESSING, Ralf, 26605 Aurich (DE); WEBER, Tobias, 12161 Berlin (DE)
(74) Vertreter: Eisenführ Speiser
(86) Internationale Anmeldenummer: PCT/EP2017/081522
(87) Internationale Veröffentlichungsnummer: WO 2018/104299

(56) Entgegenhaltungen:
- EP-A1- 2 584 193
- EP-A2- 2 463 518
- EP-A2- 2 463 520

## Beschreibung

Die vorliegende Erfindung betrifft ein Verfahren zum Betreiben einer Windenergieanlage und eine solche Windenergieanlage.

Windenergieanlagen sind bekannt und moderne Windenergieanlagen betreffen in der Regel sogenannte Horizontalachsenwindenergieanlagen, bei denen die Rotorachse im Wesentlichen horizontal angeordnet ist und die Rotorblätter eine im Wesentlichen senkrechte Rotorfläche überstreichen. Solche Windenergieanlagen bzw. diesen Typ Windenergieanlagen betrifft auch die vorliegende Erfindung.

Häufig weisen solche modernen Windenergieanlagen meist drei Rotorblätter auf, die zudem in ihrem Blattwinkel verstellt werden können. Dabei können sie regelmäßig zwischen einer Fahnenstellung von etwa 90 Grad bis zu einem optimalen Winkel im Teillastbetrieb von etwa 0 Grad, oder zumindest nur wenigen Grad unter Null, verstellt werden. Auch die vorliegende Erfindung bezieht sich auf eine Windenergieanlage mit in ihrem Blattwinkel verstellbaren Rotorblättern.

Das Verstellen der Rotorblätter wird üblicherweise dafür verwendet, die Rotorblätter ab einer Nennwindgeschwindigkeit mit weiter ansteigender Windgeschwindigkeit aus dem Wind zu drehen, nämlich in ihrem Blattwinkel zu erhöhen. Im Übrigen liegt auch der vorliegenden Erfindung die Nomenklatur für den Blattwinkel zugrunde, dass dieser zur Fahnenstellung hin erhöht wird.

In einem Teillastbereich, in dem die Windgeschwindigkeit noch nicht Nennwindgeschwindigkeit erreicht hat, wird häufig ein optimaler Blattwinkel fest eingestellt. Dieser Blattwinkel, der auch als Teillastwinkel bezeichnet werden kann, ist aerodynamisch optimal ausgewählt. Dazu wird die Windenergieanlage auch möglichst mit einer optimalen Schnelllaufzahl in diesem Teillastbetrieb betrieben. Dabei ist zu beachten, dass dieser optimale Teillastwinkel auf die optimale Schnelllaufzahl, also das Verhältnis der Rotordrehzahl zur Windgeschwindigkeit, abgestimmt ist.

Windenergieanlagen werden nun auch zunehmend in abgelegeneren Regionen aufgestellt, die auch klimatisch und von der Aufstellungshöhe von üblichen Randbedingungen signifikant abweichen können. Je stärker dann hier die Randbedingungen, besonders atmosphärische Bedingungen, von üblichen Voraussetzungen abweichen, umso weniger passen die Annahmen, die der Berechnung des optimalen Teillastwinkels und optimalen Schnelllaufzahl zugrunde liegen, zu dem Aufstellungsort. Entsprechend kann sich zumindest eine schlechtere Effizienz im Teillastbetrieb einstellen. Es kann sogar dazu führen, dass ein Teillastbetrieb wie geplant nicht möglich ist, zumindest vergleichsweise instabil arbeitet. Besonders unerwünschte Strömungsabrisse können auftreten.

Eine Lösung des Problems könnte darin bestehen, jede Windenergieanlage entsprechend individuell an den geplanten Aufstellungsort anzupassen. Das ist aber zumindest insoweit problematisch, als dass eine solche individualisierte Auslegung kostspielig sein kann und zudem entsprechende Kenntnis des geplanten Aufstellungsortes voraussetzt. Außerdem ist dann auch darauf zu achten, dass eine so individualisierte Windenergieanlage auch zu dem zugeordneten Aufstellungsort gebracht wird. Zumindest ist darauf zu achten, dass am Aufstellungsort die korrekte Parametrierung durchgeführt wird.

Selbst wenn diese Probleme beherrscht werden sollten, könnten dennoch Probleme, bedingt durch beispielsweise jahreszeitliche oder tageszeitliche oder andere Schwankungen, auftreten.

Verschiedene Verfahren zum Steuern von Windenergieanlagen, die sämtlich die angeführten Nachteile zumindest teilweise zeigen, sind beispielsweise aus US 2013/0101413 A1, US 2013/0280066 A1, US 2012/0139244 A1, EP 2 463 520 A2 und DE 10 2010 054 013 A1 bekannt.

Die US 2013/0101413 A1 offenbart ein Verfahren zum Steuern des Pitchwinkels einer Windenergieanlage. Die Windenergieanlage umfasst einen Rotor mit mindestens einem Rotorblatt. Das Verfahren umfasst das Einstellen des Anstellwinkels des mindestens einen Rotorblattes als eine Funktion der bestimmten Luftdichte.

Die US 2013/0280066 A1 umfasst ein Verfahren zum Betreiben einer Windenergieanlage umfassend das Betreiben der Windenergieanlage in einem Geräuschreduktionsmodus basierend auf wenigstens einem Sollwert eines Windenergieanlagenparameters derart, dass der von der Windturbine erzeugte Lärm unterhalb eines vordefinierten Geräuschemissionspegels bleibt. Es ist vorgesehen, einen Korrekturfaktor auf den mindestens einen Sollwert eines Windenergieanlagenparameters anzuwenden. Der Korrekturfaktor wird in Abhängigkeit von einem luftdichtebezogenen Wert bestimmt.

Die US 2012/0139244 A1 offenbart ein Verfahren zum Steuern mindestens einer Windkraftanlage, umfassend das Auswählen einer ersten effektiven Betriebskurve aus einer Mehrzahl von Betriebskurven und das Anwenden der ersten effektiven Betriebskurve zum Steuern mindestens einer Windkraftanlage. Die Betriebskurven können aus Betriebskurvensegmenten zusammengesetzt sein.

Die DE 10 2010 054 013 A1 offenbart schließlich ein Verfahren zum Betrieb einer pitchgeregelten Windenergieanlage mit mindestens einen um seine Längsachse verstellbaren Rotorblatt und einem Generator, bei der abhängig von einer Drehzahl des Generators oder des Rotors ein Sollwert für das Generatormoment vorgegeben wird, wobei ein Übergangspunkt vorgesehen ist, in dem aus einem Teillastbetrieb in einen Volllastbetrieb umgeschaltet wird, mit den Schritten Ermitteln eines Wertes für eine die Luftdichte p, Einstellen eines Vorpitchwinkels ϕₚᵣₑ ab einer Vorpitchdrehzahl die kleiner als die Drehzahl in dem Übergangspunkt ist, wobei der Wert des Vorpitchwinkels ϕₚᵣₑ von dem ermittelten Wert der Luftdichte ρ abhängig ist, derart, dass bei geringerer Luftdichte ein größerer Vorpitchwinkel als bei größerer Luftdichte eingestellt wird.

Der Erfindung liegt somit die Aufgabe zugrunde, zumindest eins der oben genannten Probleme zu adressieren. Insbesondere soll eine Lösung vorgeschlagen werden, die individuelle atmosphärische Bedingungen berücksichtigt oder zumindest besser berücksichtigt als vorher. Zumindest soll zu bekannten Lösungen eine alternative Lösung vorgeschlagen werden.

Erfindungsgemäß wird ein Verfahren zum Betreiben einer Windenergieanlage gemäß Anspruch 1 vorgeschlagen. Demnach geht die Erfindung aus von einer Windenergieanlage mit einem aerodynamischen Rotor, der mehrere Rotorblätter aufweist, die in ihrem Blattwinkel verstellbar sind. Grundsätzlich kann auch ein Rotor mit nur einem Rotorblatt verwendet werden, vorzugsweise wird aber ein aerodynamischer Rotor mit drei Rotorblättern vorgeschlagen. Außerdem ist der Rotor mit einer variablen Rotordrehzahl betreibbar. Die Rotordrehzahl kann also beispielsweise in Abhängigkeit der Windgeschwindigkeit, besonders innerhalb des Teillastbetriebs, verändert werden.

Der aerodynamische Rotor ist mit einem Generator gekoppelt, der eine Ausgangsleistung erzeugt. Bei Vernachlässigung von Verlustleistung erzeugt der Generator somit die aus dem Wind entnommene Leistung.

In einem Teillastbetrieb, in dem der Wind so schwach ist, dass die Windenergieanlage noch nicht mit ihrer maximalen Ausgangsleistung betrieben werden kann, wird die Ausgangsleistung in Abhängigkeit des Windes, also in Abhängigkeit der Windgeschwindigkeit, eingestellt. Der Teillastbetrieb ist also der Betrieb, bei dem die Windenergieanlage aufgrund zu schwachen Windes noch nicht ihre maximale Ausgangsleistung erreichen kann, in der sie nämlich insbesondere noch nicht ihre Nennleistung erreichen kann. Üblicherweise kann die Nennleistung dann erreicht werden, wenn die Windgeschwindigkeit Nennwindgeschwindigkeit erreicht hat. Entsprechend betrifft der Teillastbetrieb auch einen Betrieb der Windenergieanlage bis zur Nennwindgeschwindigkeit.

Es wird nun vorgeschlagen, dass die aktuelle Luftdichte des Windes, also die aktuelle Luftdichte der die Windenergieanlage umgebenden Atmosphäre, erfasst wird.

Es wird dann vorgeschlagen, dass jeder Blattwinkel in Abhängigkeit der Ausgangsleistung oder der Rotordrehzahl und in Abhängigkeit der erfassten Luftdichte eingestellt wird.

Demnach wird vorgeschlagen, dass im Teillastbetrieb der Blattwinkel jedes Rotorblatts eingestellt wird. Das kann auch bedeuten, dass diese synchron zueinander mit denselben Werten eingestellt werden. Es wird somit aber kein konstanter Blattwinkel über den gesamten Bereich des Teillastbetriebs vorgesehen, sondern dieser wird verändert. Diese Veränderung erfolgt in Abhängigkeit der Ausgangsleistung oder der Rotordrehzahl. Die Ausgangsleistung oder die Rotordrehzahl bildet somit eine Eingangsgröße für dieses Einstellen des Blattwinkels. Dazu kommt in Betracht, dass die Ausgangsleistung bzw. die Rotordrehzahl unmittelbar erfasst und für dieses Einstellen des Blattwinkels verwendet wird, oder dass ein zu der Ausgangsleistung oder zu der Rotordrehzahl äquivalenter Wert verwendet wird, wie beispielsweise ein zur Ausgangsleistung bzw. Rotordrehzahl proportionaler Wert, der aufgrund einer Normierung von Null bis Eins reicht.

Zusätzlich wird als Abhängigkeit zum Einstellen des Blattwinkels die erfasste Luftdichte berücksichtigt. Der Blattwinkel hängt damit also auch unmittelbar von der Luftdichte ab. Damit kann auch eine sich während des Betriebs ändernde Luftdichte berücksichtigt werden und diese Berücksichtigung erfolgt hier über ein entsprechendes Einstellen des Blattwinkels.

Es wird somit eine Lösung vorgeschlagen, die es ermöglicht, unterschiedliche Luftdichtewerte zu berücksichtigen. Damit ist eine Anpassung des Betriebs einer Windenergieanlage an Standorte mit mittleren Luftdichtewerten möglich, die von üblichen Luftdichtewerten signifikant abweichen. Es ist aber auch eine Berücksichtigung schwankender Luftdichtewerte möglich. Damit kann auch ein guter Betrieb einer Windenergieanlage an Orten realisiert werden, die starken Luftdichteschwankungen unterliegen.

Dabei wurde erkannt, dass besonders niedrige Luftdichtewerte dazu führen, dass ein effektiver Anstellwinkel am Rotorblatt zunimmt. Durch das luftdichteabhängige Verstellen der Blattwinkel, was der Fachmann auch als Pitchen bezeichnet, kann dieser so vergrößerte effektive Anstellwinkel wieder ausgeglichen werden.

Dabei ist der Anstellwinkel der Winkel zwischen Rotorblatt und scheinbarem Wind, also der Winkel zwischen dem Rotorblatt und der Richtung der im Betrieb tatsächlich anströmenden Luftströmung, also mit Berücksichtigung der Bewegung des Rotorblattes. Der Anstellwinkel kann auch als effektiver Anstellwinkel bezeichnet werden.

Vorzugsweise wird zur Erfassung der Luftdichte ein Luftdruck und eine Lufttemperatur außerhalb der Windenergieanlage, aber in der Nähe der Windenergieanlage, gemessen und daraus wird die Luftdichte bestimmt, insbesondere wird sie daraus berechnet. Somit wird also der Luftdruck unmittelbar durch aktuelle Messungen erfasst und dadurch können auch Änderungen der Luftdichte sofort erkannt werden und es kann gegebenenfalls darauf reagiert werden.

Gemäß einer Ausführungsform wird vorgeschlagen, dass das Einstellen des Blattwinkels in Abhängigkeit einer Pitchkennlinie erfolgt. Diese Pitchkennlinie gibt für den Teillastbetrieb den einzustellenden Blattwinkel als Funktion der Ausgangsleistung oder der Rotordrehzahl an. Dazu wird vorgeschlagen, dass die Pitchkennlinie außerdem von der Luftdichte abhängt. Das Einstellen des Blattwinkels kann also auf einfache Art und Weise über eine Pitchkennlinie vorgenommen werden. Die Einstellung in Abhängigkeit der Ausgangsleistung lässt sich gut umsetzen, weil die Ausgangsleistung häufig als regelungstechnische Größe

in einem verwendeten Prozessrechner verfügbar ist. Wird die Rotordrehzahl als Eingangsgröße verwendet, kann sie gemessen werden und kann als solche ebenfalls in einem verwendeten Prozessrechner verfügbar sein. Außerdem stehen die Ausgangsleistung und die Rotordrehzahl häufig in einem festgelegten Zusammenhang.

Es ist auch zu beachten, dass die Dynamik der Leistungsregelung viel schneller als die Dynamik der Pitchregelung ist, so dass dadurch auch etwaige Schwingungsprobleme zwischen der Leistungsregelung einerseits und der Pitchregelung andererseits vermieden werden.

Vorzugsweise wird vorgeschlagen, dass mehrere Pitchkennlinien hinterlegt sind und dass aus den hinterlegten Pitchkennlinien in Abhängigkeit der erfassten Luftdichte eine Pitchkennlinie ausgewählt wird, die zu der entsprechenden Luftdichte passt bzw. zu der entsprechenden Luftdichte hinterlegt wurde. Diese Pitchkennlinie wird dann zum Einstellen des Blattwinkels verwendet. Dadurch kann auf einfache Art und Weise die Luftdichte über die Pitchkennlinie berücksichtigt werden, indem nämlich die Pitchkennlinie als solche nur einen Zusammenhang zwischen Blattwinkel und Rotordrehzahl angibt, die Luftdichteabhängigkeit aber dadurch einfließt, dass mehrere Pitchkennlinien, also insbesondere eine Schar von Pitchkennlinien, hinterlegt sind und die zur jeweiligen Luftdichte passende Pitchkennlinie ausgewählt wird.

Vorzugsweise wird vorgeschlagen, dass der Blattwinkel mit abnehmender Luftdichte erhöht wird. Besonders dadurch kann einem durch die abnehmende Luftdichte ansteigenden effektiven Anstellwinkel entgegengewirkt werden. Es wurde erkannt, dass durch das Erhöhen des Blattwinkels mit abnehmender Luftdichte vermieden wird, dass sich der effektive Anstellwinkel erhöht und damit wird ein Strömungsabriss vermieden.

Dadurch kann besonders bei vergleichsweise geringen Luftdichten ein Strömungsabriss auftreten, was nun vermieden wird.

Gemäß der Erfindung wird vorgeschlagen, dass das Verfahren dadurch gekennzeichnet ist, dass das Einstellen der Ausgangsleistung dynamisch mit einer ersten Zeitkonstante und das Einstellen des Rotorblattwinkels dynamisch mit einer zweiten Zeitkonstante erfolgt. Dazu wird vorgeschlagen, dass die erste Zeitkonstante kleiner als die zweite Zeitkonstante gewählt wird, vorzugsweise wenigstens um Faktor 10 kleiner. Es wird also vorgeschlagen, dass die Ausgangsleistung mit einer höheren Dynamik eingestellt wird. Besonders kann hier als Dynamik die eines Verzögerungsgliedes erster Ordnung oder eines Verzögerungsgliedes zweiter Ordnung angesetzt werden und dazu die Zeitkonstante nach allgemein üblicher Definition bestimmt werden. Als Zeitkonstante kann dabei für das Verzögerungsglied erster Ordnung die Zeit angesehen werden, bei der die Sprungantwort des Verzögerungsgliedes den Wert 0,63 annimmt, bezogen auf einen Eingangssprung mit der Amplitude 1.

Damit kann erreicht werden, dass die vorrangige Regelung im Teillastbetrieb durch das Einstellen der Ausgangsleistung durchgeführt wird. Besonders bei geringen Schwankungen der Windgeschwindigkeit und damit geringen Schwankungen der Rotordrehzahl kann dies im Wesentlichen auf eine Reaktion der Regelung der Ausgangsleistung beschränkt werden. Vorzugsweise werden dann Blattverstellungen weniger häufig oder zumindest mit vergleichsweise geringer Amplitude durchgeführt.

Gemäß einer weiteren Ausführungsform wird vorgeschlagen, dass im Teillastbetrieb die Ausgangsleistung mittels einer Betriebskennlinie eingestellt wird. Diese Betriebskennlinie gibt die einzustellende Ausgangsleistung in Abhängigkeit der Rotordrehzahl an. Eine solche Betriebskennlinie kann also ebenso wie die oben genannte Pitchkennlinie oder die oben genannten Pitchkennlinien hinterlegt sein. Dazu wird nun zusätzlich vorgeschlagen, dass die Ausgangsleistung zusätzlich von der erfassten Luftdichte abhängt. Dies kann insbesondere so realisiert werden, dass zur Berücksichtigung unterschiedlicher Luftdichten mehrere Betriebskennlinien hinterlegt werden und diese in Abhängigkeit der Luftdichte ausgewählt werden. Insoweit kann auch hier eine Betriebskennlinienschar hinterlegt werden, wobei eine Betriebskennlinie jeweils einer Luftdichte zugeordnet ist und abhängig von der erfassten Luftdichte wird die entsprechend zugeordnete Betriebskennlinie ausgewählt.

Vorzugsweise wird auch dann die Verwendung einer Betriebskennlinie zum Einstellen der Ausgangsleistung vorgeschlagen, wenn die Betriebskennlinie nicht unmittelbar von der Luftdichte abhängt, wenn also die Luftdichte nur oder besonders über das Einstellen der Blattwinkel berücksichtigt wird.

Die Erfindung betrifft auch eine Windenergieanlage gemäß Anspruch 8 zum Erzeugen elektrischer Leistung aus Wind und eine solche Windenergieanlage umfasst einen aerodynamischen Rotor mit in ihrem Blattwinkel verstellbaren Rotorblättern, wobei der Rotor mit einer variablen Rotordrehzahl betreibbar ist. Die Windenergieanlage weist auch einen mit dem aerodynamischen Rotor gekoppelten Generator auf, mit dem eine Ausgangsleistung erzeugt wird. Diese Windenergieanlagen sind dazu vorbereitet, in einem Teillastbetrieb betrieben zu werden, der wie oben definiert ist. Dabei ist sie dazu vorbereitet, eine aktuelle Luftdichte des Windes zu erfassen und jeden Blattwinkel in Abhängigkeit der Rotordrehzahl oder der Ausgangsleistung und außerdem in Abhängigkeit der erfassten Luftdichte einzustellen.

Es wird also auch hier in dem Teillastbetrieb die Ausgangsleistung in Abhängigkeit des Windes eingestellt. Das erfolgt dabei nicht unbedingt in unmittelbarer Abhängigkeit des Windes, also nicht unbedingt in Abhängigkeit einer Windmessung, sondern vorzugsweise durch Einstellung der Ausgangsleistung in Abhängigkeit der Rotordrehzahl. Vorzugsweise wird hierbei ein stabiler Arbeitspunkt gefunden, bei dem die eingestellte Ausgangsleistung so eingestellt ist, dass sich die Rotordrehzahl nicht ändert, solange sich die Windgeschwindigkeit auch nicht ändert. Dadurch ist dann die Ausgangsleistung im Ergebnis auf die in dem Moment vorherrschende Windgeschwindigkeit eingestellt.

Die Windenergieanlage kann besonders dadurch auf das Einstellen des Blattwinkels in Abhängigkeit der Rotordrehzahl oder der Ausgangsleistung und in Abhängigkeit der erfassten Luftdichte vorbereitet sein, dass ein Prozessrechner oder insgesamt die in der Windenergieanlage vorgesehene Prozessführung oder Prozessleittechnik überhaupt in der Lage ist, eine Luftdichte zu erfassen. Dazu kann beispielsweise ein Sensor zum Messen des Luftdrucks und außerdem ein Sensor zum Messen der Lufttemperatur vorgesehen sein. Alternativ kommen entsprechende Dateneingänge in Betracht. Weiterhin kann ein entsprechender Datenspeicher vorgesehen sein, in dem entsprechende gewünschte Zusammenhänge zwischen Blattwinkel und Luftdichte diskret oder als Funktion hinterlegt sind. Besonders kann vorgesehen sein, einen Datenspeicher vorzusehen, der eine Schar von Pitchkennlinien speichert.

Vorzugsweise ist ein Leistungssteuermittel vorgesehen, das zum Einstellen der Ausgangsleistung in Abhängigkeit der Rotordrehzahl vorbereitet ist. Das Steuermittel kann besonders für einen fremderregten Synchrongenerator eine Einstellung der Fremderregung vorsehen. Dazu kann beispielsweise ein entsprechender Stromsteller zum Stellen eines Erregerstroms vorgesehen sein, der besonders in Abhängigkeit der Rotordrehzahl gesteuert werden kann.

Weiterhin ist ein Pitchsteuermittel vorgesehen, das vorbereitet ist, zum Einstellen eines Blattwinkels in Abhängigkeit der Rotordrehzahl und der Luftdichte. Dieses Pitchsteuermittel kann somit beispielsweise für jedes Rotorblatt einen Pitchantrieb umfassen und außerdem kann dazu ein Steuerungsprozessor vorgesehen sein, der das Pitchen in Abhängigkeit der Rotordrehzahl und der Luftdichte steuert, was der Pitchantrieb dann umsetzt. Ein Teil der Berechnung des jeweils einzustellenden Blattwinkels kann auch zentral für alle Rotorblätter und damit alle Pitchantriebe vorgenommen werden.

Außerdem wird ein Speichermittel vorgeschlagen, das dazu vorbereitet ist, Blattwinkeleinstellungen in Abhängigkeit der Rotordrehzahl und der Luftdichte zu speichern. Besonders wird hier vorgesehen, dass dieses Speichermittel luftdichteabhängige Pitchkennlinien speichert.

Vorzugsweise ist die Windenergieanlage dazu vorbereitet, zumindest ein Verfahren gemäß einer der vorstehend beschriebenen Ausführungsformen auszuführen. Insbesondere kann ein solches Verfahren auf einer Steuerungsvorrichtung in der Windenergieanlage implementiert sein.

Die Erfindung wird nun nachfolgend anhand von Ausführungsformen unter Bezugnahme auf die begleitenden Figuren exemplarisch näher erläutert.
- Fig. 1: zeigt schematisch eine Windenergieanlage in einer perspektivischen Darstellung.
- Fig. 2 und 3: zeigen jeweils eine Pitchkennlinienschar.
- Fig. 4: zeigt eine vereinfachte Regelungsstruktur zum Durchführen eines Einstellens eines Blattwinkels im Teillastbetrieb in Abhängigkeit der Ausgangsleistung und der erfassten Luftdichte.

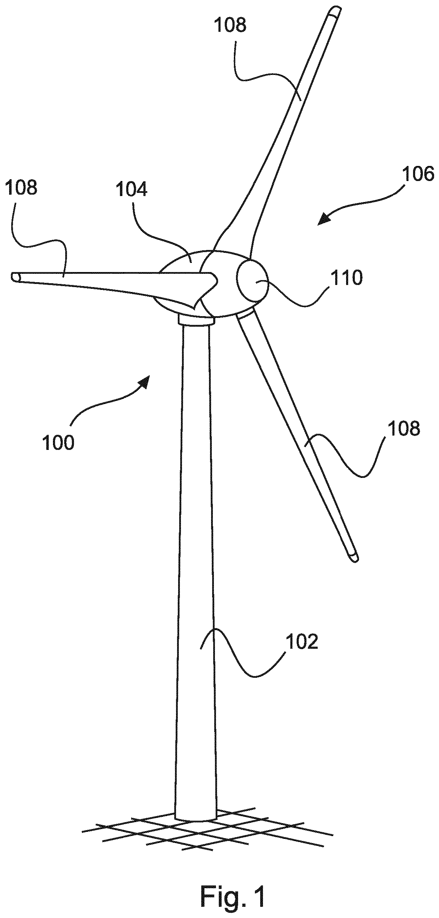

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

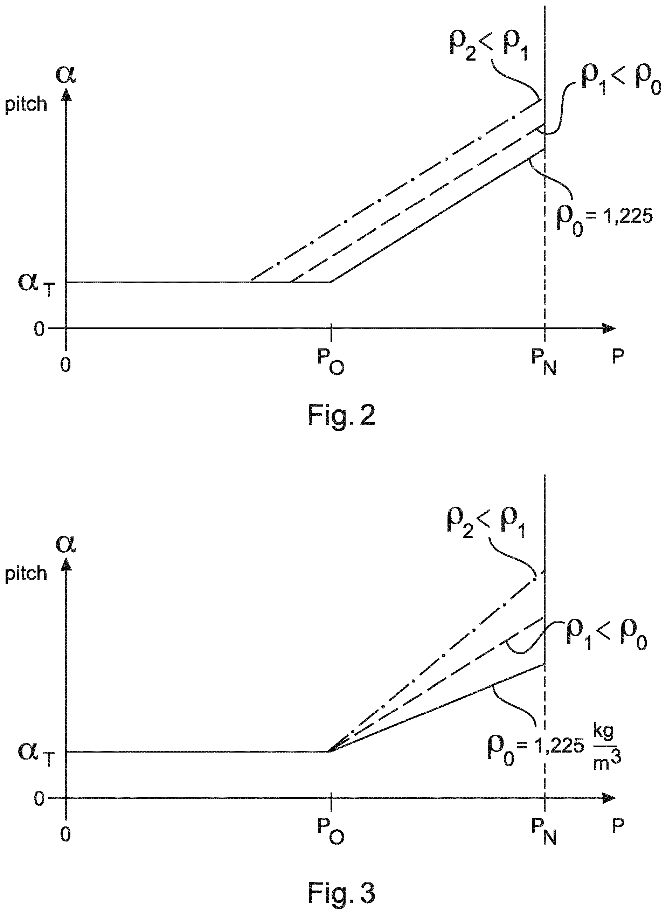

Die Figuren 2 und 3 zeigen grundsätzlich zwei unterschiedliche Arten von Kennlinienscharen. Beide Figuren 2 und 3 zeigen dazu jeweils den Blattwinkel a, der auch als Pitch oder Pitchwinkel bezeichnet werden kann in Abhängigkeit der Ausgangsleistung P. In beiden Fällen liegt zunächst bei geringen Leistungen ein konstanter Blattwinkel α vor, der den Wert eines fest vorgegebenen Teillastwinkels α_{T} aufweisen kann. Mit zunehmender Leistung P wird dann vorgeschlagen, den Blattwinkel α zu erhöhen. Dabei werden abhängig der Luftdichte p unterschiedliche Kennlinien für den Blattwinkel vorgesehen, die somit eine Kennlinienschar bilden. Darin unterscheiden sich die beiden exemplarischen Vorschläge der Figuren 2 und 3.

Figur 2 zeigt einen Verlauf, bei dem der Blattwinkel bei umso kleineren Leistungen P erhöht wird, je geringer die Luftdichte p ist. Die durchgezogene Kurve zeigt dabei den Verlauf des Blattwinkels für eine als normale Luftdichte ρ₀, für die ein Wert von 1,225 kg/m³ zugrundegelegt wird. Für diese normale Luftdichte erhöht sich der Blattwinkel ab einer Leistung P₀. Die gestrichelte Kennlinie zeigt einen Verlauf für eine geringere Luftdichte ρ₁ und die strichpunktierte Kennlinie einen Verlauf für eine noch geringere Luftdichte ρ₂. Gemäß dieser beiden Kennlinien wird der Blattwinkel bereits für eine geringere Ausgangsleistung als P₀ erhöht. Der Wert von ρ₂ kann z.B. 1 kg/m³ und der von ρ₁ 1,1 kg/m³ betragen.

Es ist zu erkennen, dass die Kennlinien der Figur 2 so gewählt wurden, dass sie etwa parallel zueinander verlaufen.

In der Ausführungsform der Figur 3 wird vorgeschlagen, die Blattwinkel auch für unterschiedliche Luftdichten ρ₀, ρ₁ und ρ₂ ab einer Leistung P₀ zu erhöhen. Es wird dann aber ein umso steilerer Verlauf vorgeschlagen, je geringer die Luftdichte ist.

Die Werte für P0, ρ₀, ρ₁ und ρ₂, können für beide Figuren 2 und 3 gleich sein. Beide Figuren 2 und 3 zeigen auch einen Verlauf der Blattwinkelkennlinien und damit der Kennlinienscharen bis zur Nennleistung P_{N}.

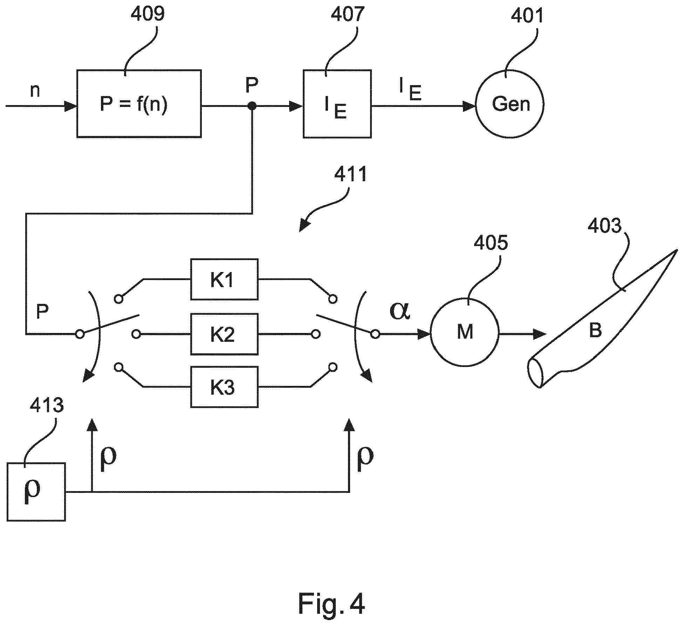

Die Regelungsstruktur der Figur 4 zeigt veranschaulichend einen Generator 401 und ein Rotorblatt 403, das über einen Pitchantrieb 405 verstellt werden kann. Diese Elemente sind nur symbolisch dargestellt und es können bspw. drei Rotorblätter 403 mit jeweils einem Pitchantrieb 405 vorgesehen sein, die durch den Wind angetrieben werden und dadurch den Generator 401 antreiben.

Der Generator 401 ist hier als fremderregter Synchrongenerator vorgesehen und wird in dieser Struktur über einen Stromsteller 407 angesteuert, der den Erregerstrom I_{E} steuert. Dadurch wird eine Leistungssteuerung vorgenommen, die hier nur vereinfacht angedeutet ist und auch anders vorgenommen werden kann. Es können auch andere Generatoren vorgesehen sein. Der Stromsteller 407 steht hier auch repräsentativ für andere Leistungssteuerungen. Er erhält einen Leistungswert P als Vorgabe und dieser Leistungswert P ergibt sich aus einer Drehzahl-Leistungs-Kennlinie, die in dem Kennlinienblock 409 hinterlegt ist. Der Kennlinienblock 409 gibt basierend auf der Drehzahl-Leistungs-Kennlinie in Abhängigkeit der Drehzahl n des Rotors, zu dem die Rotorblätter 403 gehören, einen Leistungswert P aus.

Der Leistungswert P geht nicht nur in den Stromsteller ein, um über den Stromsteller 407 die Leistung des Generators 401 zu steuern, sondern der Leistungswert P wird auch als Eingangsgröße für eine Blattwinkelvorgabeeinheit 411 verwendet. Die Blattvorgabeeinheit 411 bestimmt in Abhängigkeit der Leistung P einen einzustellenden Blattwinkel a. Dabei wird vorzugsweise als Eingangsgröße die Ausgangsleistung der Windenergieanlage verwendet, also die tatsächlich von der Windenergieanlage abgegebene Leistung. Der Einfachheit halber und zur Veranschaulichung kann hier aber die Ausgangsleistung mit der Leistung P, die der Kennlinienblock 409 ausgibt, gleichgesetzt werden. Die Ausgangsleistung wird mit hoher Dynamik eingestellt, sodass diese Vereinfachung zur Veranschaulichung zulässig ist und sodass keine Schwingungsprobleme oder -gefahren zwischen der Leistungseinstellung einerseits und der Blattwinkelverstellung andererseits entstehen.

Die Blattwinkelvorgabeeinheit 411 weist mehrere Kennlinienblöcke auf, von denen hier exemplarisch drei Kennlinienblöcke K1, K2 und K3 gezeigt sind. Jeder dieser Kennlinienblöcke weist eine leistungsabhängige Blattwinkelkennlinie auf, die zusammen eine Kennlinienschar bilden bzw. zur Auswahl bereitstellen. Es wird nun vorgeschlagen, je nach Luftdichte p einen der Kennlinienblöcke und damit eine der Kennlinien auszuwählen. Dafür kann die Luftdichte r bspw. durch eine Messeinheit 413 erfasst werden.

Der Blattwinkel α kann somit in Abhängigkeit der Ausgangsleistung P und der Luftdichte p eingestellt werden. Dafür bildet die Ausgangsleistung P die Eingangsgröße für die Blattvorgabeeinheit 411 und die Luftdichte p geht dadurch ein, dass abhängig der Luftdichte p eine angepasste Kennlinie ausgewählt wird. Der so ermittelte Blattwinkel a wird dann auf den Pitchantrieb 405 gegeben, um das jeweilige Rotorblatt 403 entsprechend einzustellen.

Somit wurde erfindungsgemäß eine Lösung vorgeschlagen, um den Stand der Technik zu verbessern, bei dem Rotorblätter so ausgelegt werden, dass sie bei einer Normluftdichte von p = 1,225 kg/m³ in allen Betriebspunkten der Anlage ablösefrei umströmt werden. Es wurde erkannt, dass zunehmend nun Anlagen an Standorten geplant werden, an denen die Luftdichte, teilweise deutlich, unter der Standardluftdichte liegt. Dies führt dazu, dass durch den Anstieg der effektiven Anstellwinkel am Rotorblatt Strömungsablösungen auftreten können, was wiederum zu beträchtlichen Leistungsverlusten führen kann. Dabei wurde erkannt, dass je kleiner die Luftdichte wird, desto mehr die effektiven Anstellwinkel am Rotorblatt steigen und desto wahrscheinlicher es ist, dass es zu leistungsreduzierenden Strömungsablösungen kommt. Durch Pitchen der Rotorblätter können die Strömungsablösungen vermieden werden. Es wird hierbei vorgeschlagen, dass das Pitchen der Rotorblätter der Luftdichte angepasst wird. Demnach wird vorgeschlagen, dass der einzustellende Pitchwinkel nun eine Funktion der elektrischen Ausgangsleistung, nämlich der Ausgangsleistung, und der Luftdichte ist. Es wird somit vorgeschlagen, dass nicht nur eine Funktion der elektrischen Ausgangsleistung der Einstellung des Blattwinkels zugrundeliegt. Es wird somit vorgeschlagen, an der Windenergieanlage den Luftdruck und die Temperatur zu messen und daraus die Luftdichte zu berechnen, sodass mithilfe einer hinterlegten Funktion der jeweilige Pitchwinkel bestimmt werden kann.

Letztlich kann damit auch die Erhöhung der Jahreserträge einer pitchgesteuerten, drehzahlvariablen Windenergieanlage durch die vorgeschlagene Verwendung von an die Luftdichte des Standortes angepasste Pitchkennlinien erreicht werden.

## Patentansprüche

1. Verfahren zum Betreiben einer Windenergieanlage zum Erzeugen elektrischer Leistung aus Wind, wobei
- die Windenergieanlage einen aerodynamischen Rotor mit in ihrem Blattwinkel verstellbaren Rotorblättern aufweist und der Rotor mit einer variablen Rotordrehzahl betreibbar ist, und
- die Windenergieanlage einen mit dem aerodynamischen Rotor gekoppelten Generator aufweist, zum Erzeugen einer Ausgangsleistung, umfassend die Schritte
- in einem Teillastbetrieb, in dem der Wind so schwach ist, dass die Windenergieanlage noch nicht mit ihrer maximalen Ausgangsleistung betrieben werden kann, Einstellen der Ausgangsleistung in Abhängigkeit des Windes,
- Erfassen einer aktuellen Luftdichte des Windes und
- Einstellen jedes Blattwinkels in Abhängigkeit der Ausgangsleistung oder der Rotordrehzahl und außerdem in Abhängigkeit der erfassten Luftdichte, **dadurch gekennzeichnet, dass**
das Einstellen der Ausgangsleistung dynamisch mit einer ersten Zeitkonstante und das Einstellen des Rotorblattwinkels dynamisch mit einer zweiten Zeitkonstante erfolgt, wobei die erste Zeitkonstante kleiner als die zweite Zeitkonstante gewählt wird.

2. Verfahren nach Anspruch 1, **dadurch gekennzeichnet, dass** zur Erfassung der Luftdichte ein Luftdruck und eine Lufttemperatur außerhalb der Windenergieanlage gemessen werden und daraus die Luftdichte bestimmt, insbesondere berechnet wird.

3. Verfahren nach Anspruch 1 oder 2, **dadurch gekennzeichnet, dass** das Einstellen des Blattwinkels in Abhängigkeit einer Pitchkennlinie erfolgt, die für den Teillastbetrieb den einzustellenden Blattwinkel als Funktion der Ausgangsleistung oder der Rotordrehzahl angibt, wobei die Pitchkennlinie von der Luftdichte abhängt.

4. Verfahren nach einem der vorstehenden Ansprüche, **dadurch gekennzeichnet, dass** mehrere Pitchkennlinien hinterlegt sind und aus den hinterlegten Pitchkennlinien in Abhängigkeit der erfassten Luftdichte eine Pitchkennlinie ausgewählt wird und zum Einstellen des Blattwinkels verwendet wird.

5. Verfahren nach einem der vorstehenden Ansprüche, **dadurch gekennzeichnet, dass** der Blattwinkel mit abnehmender Luftdichte vergrößert wird, insbesondere um einem durch die abnehmende Luftdichte ansteigenden effektiven Anstellwinkel entgegenzuwirken.

6. Verfahren nach einem der vorstehenden Ansprüche, **dadurch gekennzeichnet, dass** die erste und die zweite Zeitkonstante jeweils die Zeitkonstante eines Verzögerungsgliedes erster Ordnung oder eines Verzögerungsgliedes zweiter Ordnung sind.

7. Verfahren nach einem der vorstehenden Ansprüche, **dadurch gekennzeichnet, dass** im Teillastbetrieb die Ausgangsleistung mittels einer Betriebskennlinie eingestellt wird, die die einzustellende Ausgangsleistung in Abhängigkeit der Rotordrehzahl angibt, wobei die Ausgangsleistung zusätzlich von der erfassten Luftdichte abhängt, insbesondere so, dass zur Berücksichtigung unterschiedlicher Luftdichten mehrere Betriebskennlinien hinterlegt sind und in Abhängigkeit der Luftdichte eine dieser Betriebskennlinien ausgewählt wird.

8. Windenergieanlage zum Erzeugen elektrischer Leistung aus Wind, umfassend:
- einen aerodynamischen Rotor mit in ihrem Blattwinkel verstellbaren Rotorblättern, wobei der Rotor mit einer variablen Rotordrehzahl betreibbar ist, und
- einen mit dem aerodynamischen Rotor gekoppelten Generator, zum Erzeugen einer Ausgangsleistung, wobei die Windenergieanlage dazu vorbereitet ist,
- in einem Teillastbetrieb, in dem der Wind so schwach ist, dass die Windenergieanlage noch nicht mit ihrer maximalen Ausgangsleistung betrieben werden kann, eine Ausgangsleistung in Abhängigkeit des Windes zu erzeugen,
- eine aktuelle Luftdichte des Windes zu erfassen und
- jeden Blattwinkel in Abhängigkeit der Ausgangsleistung oder der Rotordrehzahl und außerdem in Abhängigkeit der erfassten Luftdichte einzustellen, **dadurch gekennzeichnet, dass**
das Einstellen der Ausgangsleistung dynamisch mit einer ersten Zeitkonstante und das Einstellen des Rotorblattwinkels dynamisch mit einer zweiten Zeitkonstante erfolgt, wobei die erste Zeitkonstante kleiner als die zweite Zeitkonstante gewählt wird.

9. Windenergieanlage nach Anspruch 8, **dadurch gekennzeichnet, dass**
- ein Leistungssteuermittel vorgesehen ist, vorbereitet zum Einstellen der Ausgangsleistung in Abhängigkeit der Rotordrehzahl,
- ein Pitch-Steuermittel vorgesehen ist, vorbereitet zum Einstellen eines Blattwinkels in Abhängigkeit der Rotordrehzahl und der Luftdichte, und
- ein Speichermittel vorgesehen ist, vorbereitet zum Speichern von Blattwinkeleinstellungen in Abhängigkeit der Rotordrehzahl und der Luftdichte, insbesondere zum Speichern von luftdichteabhängigen Pitchkennlinien.

10. Windenergieanlage nach Anspruch 8 oder 9, **dadurch gekennzeichnet, dass** sie dazu vorbereitet ist, ein Verfahren nach einem der Ansprüche 1 bis 7 auszuführen, insbesondere, dass sie dazu eine Steuerungsvorrichtung aufweist.

## Claims

1. A method for operating a wind power installation for generating electrical power from wind, wherein:
- the wind power installation comprises an aerodynamic rotor with rotor blades of which the blade angle is adjustable, and the rotor is configured to be operated at a variable rotor rotation speed, and
- the wind power installation has a generator that is coupled to the aerodynamic rotor and is configured to generate an output power, the method comprising:
- setting the output power depending on wind in a partial-load operation in which the wind is so weak that the wind power installation cannot yet be operated at its maximum output power;
- detecting a current air density of the wind; and
- setting each blade angle depending on the output power or the rotor rotation speed and furthermore depending on the detected air density, **characterized in that**
the output power is dynamically set with a first time constant, wherein the blade angle is dynamically set with a second time constant, wherein the first time constant is selected to be smaller than the second time constant.

2. The method according to claim 1, **characterized in that** detecting the air density comprises measuring an air pressure and an air temperature outside of the wind power installation in order to determine the air density from it, in particular to calculate the air density from it.

3. The method according to claim 1 or 2, **characterized in that** the blade angle is set depending on a pitch characteristic which specifies, for the partial-load operation, the blade angle to be set as a function of the output power or of the rotor rotation speed, wherein the pitch characteristic depends on the air density.

4. The method according to one of the previous claims, **characterized in that** a plurality of pitch characteristics are stored and one pitch characteristic is selected from amongst the stored pitch characteristics depending on the detected air density and is used for setting the blade angle.

5. The method according to one of the previous claims, **characterized in that** the blade angle is increased as the air density decreases, in particular in order to counteract an effective angle of attack which increases due to the decreasing air density.

6. The method as claimed in one of the preceding claims, **characterized in that** the first and the second time constant are respectively the time constant of a delay element of the first order or of a delay element of the second order.

7. The method as claimed in one of the preceding claims, **characterized in that**, in the partial-load operation, the output power is set by means of an operating characteristic which specifies the output power to be set depending on the rotor rotation speed, wherein the output power additionally depends on the detected air density, in particular such that, for the purpose of taking into account different air densities, a plurality of operating characteristics are stored and one of these operating characteristics is selected depending on the air density.

8. A wind power installation for generating electrical power from wind, comprising:
- an aerodynamic rotor with rotor blades of which the blade angle is adjustable, wherein the rotor is configured to be operated at a variable rotor rotation speed, and
- a generator coupled to the aerodynamic rotor, wherein the generator is configured to generate an output power, wherein the wind power installation is configured
- to generate an output power depending on the wind in a partial-load operation in which the wind is so weak that the wind power installation cannot yet be operated at its maximum output power,
- to detect a current air density of the wind and
- to set each blade angle depending on the output power or the rotor rotation speed and furthermore depending on the detected air density, **characterized in that** the output power is dynamically set with a first time constant, wherein the blade angle is dynamically set with a second time constant, wherein the first time constant is selected to be smaller than the second time constant.

9. The wind power installation according to claim 8, **characterized in that**
- a power control means is provided, configured for setting the output power depending on the rotor rotation speed,
- a pitch control means is provided, configured for setting a blade angle depending on the rotor rotation speed and the air density, and
- a storage means is provided, configured for storing blade angle settings depending on the rotor rotation speed and the air density, in particular for storing air density-dependent pitch characteristics.

10. The wind power installation according to claim 8 or 9, **characterized in that** it is configured to execute a method as claimed in one of claims 1 to 7, in particular **in that** it comprises a control apparatus for this purpose.

## Revendications

1. Procédé d'exploitation d'une installation d'énergie éolienne pour produire de la puissance électrique à partir du vent, dans lequel :
- l'installation d'énergie éolienne comprenant un rotor aérodynamique avec des pales de rotor dont l'angle de pale est réglable, et le rotor étant configuré pour fonctionner à une vitesse de rotation de rotor variable, et
- l'installation d'énergie éolienne comprenant un générateur couplé au rotor aérodynamique, pour générer une puissance de sortie, comprenant les étapes suivantes :
- réglage de la puissance de sortie en fonction du vent dans un fonctionnement à charge partielle dans lequel le vent est si faible que l'installation d'énergie éolienne ne peut pas encore être exploitée à sa puissance de sortie maximale ;
- détection d'une densité de l'air actuelle du vent ; et
- réglage de chaque angle de pale en fonction de la puissance de sortie ou de la vitesse de rotation du rotor et en outre en fonction de la densité de l'air détectée, **caractérisé en ce que**
le réglage de la puissance de sortie étant effectué de manière dynamique avec une première constante de temps et le réglage de l'angle de la pale étant effectué de manière dynamique avec une seconde constante de temps, dans lequel la première constante de temps étant choisie inférieure à la seconde constante de temps.

2. Procédé selon la revendication 1, **caractérisé en ce que** la détection de la densité de l'air comprend la mesure d'une pression de l'air et d'une température de l'air à l'extérieur de l'installation d'énergie éolienne afin d'en déterminer la densité de l'air, en particulier de la calculer.

3. Procédé selon la revendication 1 ou 2, **caractérisé en ce que** l'angle de pale est réglé en fonction d'une caractéristique de pas qui indique, pour le fonctionnement à charge partielle, l'angle de pale à régler en fonction de la puissance de sortie ou de la vitesse de rotation du rotor, la caractéristique de pas dépendant de la densité de l'air.

4. Procédé selon l'une des revendications précédentes, **caractérisé en ce qu'**une pluralité de caractéristiques de pas sont stockées et qu'une caractéristique de pas est sélectionnée parmi les caractéristiques de pas stockées en fonction de la densité de l'air détectée et est utilisée pour régler l'angle de la pale.

5. Procédé selon l'une des revendications précédentes, **caractérisé en ce que** l'angle de la pale est augmenté lorsque la densité de l'air diminue, en particulier pour contrecarrer un angle d'attaque effectif qui augmente en raison de la diminution de la densité de l'air.

6. Procédé selon l'une des revendications précédentes, **caractérisé en ce que** la première et la seconde constante de temps sont respectivement la constante de temps d'un élément de retard de premier ordre ou d'un élément de retard de deuxième ordre.

7. Procédé selon l'une des revendications précédentes, **caractérisé en ce que**, en fonctionnement à charge partielle, la puissance de sortie est réglée au moyen d'une caractéristique de fonctionnement qui indique la puissance de sortie à régler en fonction de la vitesse de rotation du rotor, la puissance de sortie dépendant en outre de la densité de l'air détectée, en particulier de telle sorte que, pour prendre en compte différentes densités de l'air, plusieurs caractéristiques de fonctionnement sont stockées et l'une de ces caractéristiques de fonctionnement est sélectionnée en fonction de la densité de l'air.

8. Installation d'énergie éolienne pour produire de la puissance électrique à partir du vent, comprenant :
- un rotor aérodynamique avec des pales de rotor dont l'angle de pale est réglable, le rotor étant configuré pour fonctionner à une vitesse de rotation de rotor variable, et
- un générateur couplé au rotor aérodynamique, dans lequel le générateur est configuré pour générer une puissance de sortie, l'installation d'énergie éolienne étant configurée pour :
- générer une puissance de sortie en fonction du vent dans un fonctionnement à charge partielle dans lequel le vent est si faible que l'installation d'énergie éolienne ne peut pas encore être exploitée à sa puissance de sortie maximale,
- détecter une densité de l'air actuelle du vent et
- régler chaque angle de pale en fonction de la puissance de sortie ou de la vitesse de rotation du rotor et en outre en fonction de la densité de l'air détectée, **caractérisé en ce que**
le réglage de la puissance de sortie étant effectué de manière dynamique avec une première constante de temps, et le réglage de l'angle de pale du rotor étant effectué de manière dynamique avec une deuxième constante de temps, la première constante de temps étant choisie inférieure à la seconde constante de temps.

9. Installation d'énergie éolienne selon la revendication 8, **caractérisée en ce que**
- un moyen de commande de puissance est prévu, configuré pour régler la puissance de sortie en fonction de la vitesse de rotation du rotor,
- un moyen de commande de pas est prévu, configuré pour régler un angle de pale en fonction de la vitesse de rotation du rotor et de la densité de l'air, et
- un moyen de stockage est prévu, configuré pour stocker des réglages d'angle de pale en fonction de la vitesse de rotation du rotor et de la densité de l'air, en particulier pour stocker des caractéristiques de pas dépendantes de la densité de l'air.

10. Installation d'énergie éolienne selon la revendication 8 ou 9, **caractérisée en ce qu'**elle est configurée pour exécuter un procédé selon l'une des revendications 1 à 7, en particulier **en ce qu'**elle comprend un dispositif de commande à cet effet.
